# FASCICULE DE BREVET EUROPEEN

(11) **EP 3 339 965 B1**
(45) Date de publication et mention de la délivrance du brevet: **08.07.2020**
(21) Numéro de dépôt: 17206934.6
(22) Date de dépôt: 13.12.2017
(51) Int. Cl.: G04B 1/26, G04B 17/06, G04B 13/02, G04B 19/02, F16H 35/00

(54) **MOUVEMENT HORLOGER**
UHRWERK
CLOCK MOVEMENT

(30) Priorité: 22.12.2016 CH 17142016
(43) Date de publication de la demande: 27.06.2018
(73) Titulaire: GFPI S.A., 2301 La Chaux-de-Fonds (CH); CompliTime SA, 2301 La Chaux-de-Fonds (CH)
(72) Inventeur: FORSEY, Stephen, 2416 Les Brenets (CH); GREUBEL, Robert, 2400 Le Locle (CH)
(74) Mandataire: e-Patent SA

(56) Documents cités:
- DE-A1- 2 001 709
- FR-A- 888 600
- FR-A- 1 219 285
- FR-A- 1 458 057
- FR-A- 1 572 838
- US-A- 2 077 115

## Description

### Domaine technique

La présente invention se rapporte au domaine de l'horlogerie. Elle porte, plus particulièrement, sur un mouvement pour pièce d'horlogerie.

### Etat de la technique

Il est connu de prévoir un témoin de fonctionnement de l'organe réglant d'un mouvement horloger, comme par exemple un élément coloré prévu sur l'ancre de l'échappement de telle sorte qu'il soit visible au travers d'un guichet prévu dans le cadran lorsque l'ancre se trouve dans une seule de ses positions de repos. Ce faisant, l'élément coloré crée un clignotement lorsque l'organe réglant est en marche.

Cependant, cet élément coloré apporte de la masse à l'ancre, ce qui augmente son inertie et nécessite plus d'énergie pour son fonctionnement qu'une ancre conventionnelle. Par ailleurs, cet apport de masse est incompatible avec un échappement à haute fréquence ou de taille réduite, ce qui implique un besoin de réduire l'inertie des composants de l'échappement autant que possible.

Le document FR 1219285 décrit un balancier à spiral régulateur de mouvement d'horlogerie muni d'ailettes disposées dans un plan perpendiculaire ou sensiblement perpendiculaire au plan du balancier, ces ailettes servant de régulateur d'amplitude. Le document FR 1458057 décrit un oscillateur pneumo-mécanique comprenant une masse munie d'aubes et soumise à une force de rappel fournie par un ressort. La rotation de la masse vers sa position de repos entraine l'ouverture d'une soupape qui laisse échapper de l'air comprimé depuis un tuyau qui se dirige vers lesdites aubes. Le flux d'air entraine la masse en rotation à l'encontre du ressort, ce qui entraine la fermeture de la soupape et arrête le flux d'air. La masse se déplace ensuite à nouveau vers sa position de repos sous la commande du ressort, et le cycle recommence. La soupape actionnée par les oscillations de la masse constitue ainsi un échappement dans le sens horloger, et entretient les oscillations de l'ensemble masse-ressort. Cet ensemble constitue donc l'organe réglant du système, et sa fréquence naturelle est exploitée pour fournir une base de temps. Un tel système est certes intéressant en tant qu'alternative inhabituelle à un organe réglant du genre balancier-spiral entretenu par un échappement conventionnel, mais ne fournit aucun témoin de fonctionnement de l'oscillateur.

Le document FR 888600 décrit un moteur thermo-pneumatique pour l'actionnement de mécanismes tels que des mécanismes d'horlogerie. Ce moteur comporte une soufflerie constituée par une chambre chauffée électriquement et périodiquement sous la commande d'un autre mécanisme. L'air sortant de la soufflerie entraine en rotation une roue à aubes afin de fournir une force motrice audit mécanisme. Cet agencement ne constitue donc aucun organe réglant, ses actuations périodiques étant commandés depuis un autre mécanisme qui doit donc comporter son propre organe réglant qui définit la base de temps utilisée. En effet, la soufflerie n'a aucune fréquence naturelle qui pourrait être exploitée dans ce but, notamment en lien avec la périodicité de 30 ou 60 secondes indiquée par ce document. Par conséquent, la soufflerie est passive et ne sert qu'à générer une force motrice sous la commande d'un autre mécanisme, ce qui n'est donc pas pertinent par rapport à la question du témoin de fonctionnement d'un oscillateur.

Le document DE2001709 décrit un mécanisme d'entrainement magnétique servant à convertir des oscillations d'aimants dans un mouvement de rotation d'un arbre. Ce système n'exploite aucun flux d'air dans le but de fournir un témoin de fonctionnement d'un oscillateur, ni dans n'importe quel autre but.

Le but de la présente invention est ainsi d'au moins partiellement surmonter au moins l'un des inconvénients susmentionnés.

### Divulgation de l'invention

De façon plus précise, l'invention concerne un mouvement pour pièce d'horlogerie comprenant un organe réglant comprenant au moins un oscillateur, tel qu'un balancier associé à un spiral ou un diapason, agencé pour effectuer des oscillations. L'oscillateur est entouré par un fluide tel que de l'air, de l'azote, de l'argon ou d'un autre gaz de telle sorte que les oscillations de l'oscillateur perturbent ledit fluide dans une zone adjacente audit oscillateur. Selon l'invention, le mouvement comprend en outre au moins une aube se situant au moins partiellement dans ladite zone, et un organe d'indication en liaison cinématique avec ladite aube. Cette aube peut être portée par exemple par un levier, une tige, ou une roue à aubes, et est défini comme étant un élément apte à être déplacé par des mouvements du fluide dans lequel elle se trouve. Cette définition n'implique aucune géométrie particulière, et l'aube peut être droite, courbée, ou similaire.

Puisque l'aube sera déplacée par les perturbations du fluide autour de l'oscillateur, il est possible de prévoir un témoin du fonctionnement de l'oscillateur qui n'est pas en liaison cinématique avec ce dernier, et qui ne perturbe donc pas son fonctionnement.

Avantageusement, dans le cas où l'oscillateur est un balancier, ce dernier peut comporter une pluralité de structures s'étendant vers l'extérieur sur au moins une partie de son pourtour. Ces structures engendrent une perturbation plus importante du fluide, afin que l'aube soit déplacée plus fortement lors des oscillations de l'oscillateur.

Avantageusement, ledit balancier peut comporter une pluralité de structures agencées pour favoriser le flux dudit fluide dans un sens prédéterminé, ce qui engendre des déplacements de l'aube principalement dans un seul sens. Si l'aube est portée par une roue à aubes, cette dernière peut éventuellement effectuer des rotations complètes au lieu d'oscillations.

Dans des variantes, le levier ou la roue qui porte ladite aube peut être pivoté(e) sur un élément de bâti que comporte le mouvement, et ce autour d'un axe quelconque. Par exemple, cet axe peut être parallèle ou perpendiculaire à l'axe de rotation de l'oscillateur, ou peut faire un autre angle quelconque avec ce dernier.

Dans le cas d'un levier qui porte l'aube, ce dernier peut également porter un contrepoids agencé pour équilibrer ladite aube autour de l'axe de rotation du levier. Ce contrepoids peut, par exemple, être une deuxième aube qui n'est pas destinée à entrer dans ladite zone. Ce faisant, le levier est exempt de l'influence de la gravité.

Dans une variante, l'aube fait partie d'une roue à aubes présentant une pluralité d'aubes incurvées selon un seul sens prédéterminé, afin d'engendrer une rotation de l'aube dans un seul sens. Avantageusement, le balancier peut comporter également une pluralité d'aubes incurvées selon ledit même sens, afin de favoriser le flux dudit fluide dans un seul sens autour du balancier.

Avantageusement, ledit organe d'indication comporte un premier motif représentant un réseau agencé pour créer un moiré avec un deuxième motif monté sur un élément fixe du mouvement. Ce premier motif peut, par exemple, se situer sur une surface de l'organe d'indication, et le deuxième motif peut être prévu sur un élément transparent au travers duquel le premier motif est visible. Un petit déplacement de l'organe d'indication engendre un changement plus important du moiré généré, de telle sorte que les déplacements de l'organe d'indication sont rendus plus visibles.

L'invention porte également sur une pièce d'horlogerie comprenant un mouvement comme défini ci-dessus. Cette pièce peut avantageusement comporter un dispositif optique agencé pour permettre de visualiser ledit organe d'affichage. Le dispositif optique peut par exemple être monté sur le mouvement, dans une carrure, un verre ou un fond que comporte la pièce, ou similaire.

### Brève description des dessins

D'autres détails de l'invention apparaîtront plus clairement à la lecture de la description qui suit, faite en référence aux dessins annexés dans lesquels :
- les figures 1 à 5 illustrent schématiquement divers mode de réalisation d'une partie d'un mouvement d'horlogerie selon l'invention ; et
- la figure 6 illustre schématiquement un organe d'affichage pour un tel mouvement, l'organe d'affichage étant agencé pour produire un moiré.

### Modes de réalisation de l'invention

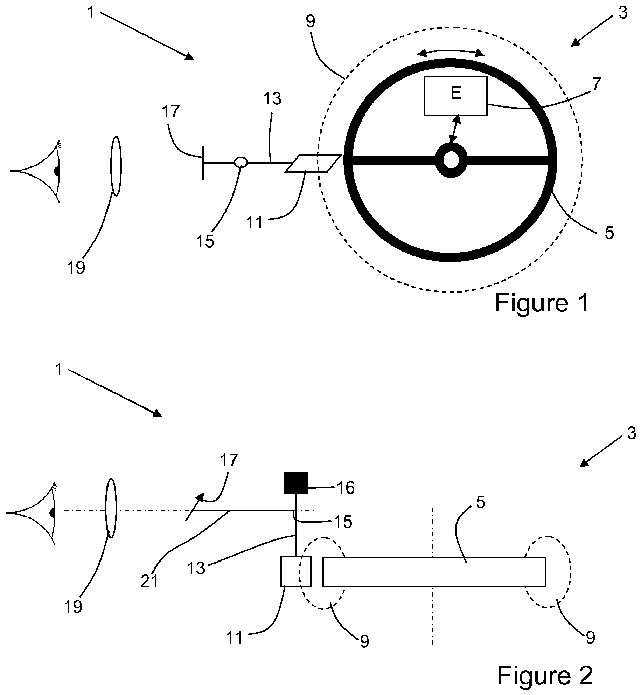

La figure 1 illustre schématiquement une partie d'un mouvement 1 selon l'invention. Ce mouvement 1 comprend un organe réglant 3 de genre quelconque, illustré ici comme étant un balancier 5 associé à un spiral (non illustré) de façon connue, et coopérant avec un échappement 7 de type quelconque. Alternativement, l'organe réglant peut incorporer un diapason ou un autre type d'oscillateur dont les déplacements perturbent son environnement voisin.

Lors des oscillations du balancier 5 (ou autre oscillateur), le fluide présent à l'intérieur du boîtier logeant le mouvement 1 est perturbé dans une zone 9 adjacente à la serge du balancier 5, ceci étant dû aux frottements entre le balancier 5 et ce fluide. Ce dernier est typiquement de l'air, mais peut aussi être de l'azote, l'argon ou similaire.

Au moins une aube 11 se trouve au moins partiellement dans cette zone 9 et est montée sur un levier 13 pivoté sur un élément de bâti (non illustré) autour d'un axe 15. Ce dernier est substantiellement parallèle à l'axe du balancier 5. À l'autre extrémité du levier 13 se trouve un organe d'indication 17 qui peut également servir en tant que contrepoids pour équilibrer l'aube 11. Alternativement, un contrepoids séparé peut être prévu. Ce contrepoids peut simplement être encore une aube substantiellement identique à l'aube 11.

L'aube 11 est idéalement fabriquée dans un matériau de moindre densité, tel que du carbone sous forme de diamant, de l'alumine, du corindon, des fibres de carbone, de l'aluminium, du magnésium, du polymère, ou similaire. Il est également possible d'utiliser une matière d'origine biologique en tant qu'aube 11, comme par exemple une aile de mouche, d'abeille ou similaire, une partie d'un pétale séché, d'une plume d'oiseau, d'une aile de papillon ou similaire.

Avec cette construction, lorsque le balancier 5 oscille, le fluide dans ladite zone 9 est perturbé de telle sorte qu'il est entraîné en écoulement visqueux par le balancier, selon un mouvement de va-et-vient. L'aube 11 est entraînée par ce déplacement de fluide, et oscille par conséquent en synchronisme avec les mouvements de ce dernier.

Par conséquent, l'organe d'indication 17, qui est solidaire de l'aube 11, oscille aussi, ce qui est visible par un utilisateur, par exemple au travers d'un dispositif optique 19 tel qu'une loupe, prévu par exemple sur le mouvement 1 ou dans le fond, le verre ou la carrure du boîtier logeant le mouvement. Cette loupe peut se situer par exemple dans la paroi de la carrure, ou peut être associée à un prisme ou à un miroir permettant de visualiser l'organe d'indication 17 depuis le côté cadran de la pièce.

La figure 2 illustre une variante qui diffère de celle de la figure 1 en ce que l'axe de rotation 15 du levier 13 est substantiellement perpendiculaire à celui du balancier, le levier 13 étant pivoté dans des paliers ad hoc (non illustrés) et portant un contrepoids 16 qui sert à équilibrer l'aube 11.

Dans cette variante, l'organe d'indication 17 se trouve monté sur une tige 21 qui est coaxiale à l'axe de rotation 15 du levier 13, et qui peut être visualisé à nouveau au travers d'un dispositif optique 19, pour lequel les mêmes commentaires que ceux émis ci-dessus s'appliquent également ici.

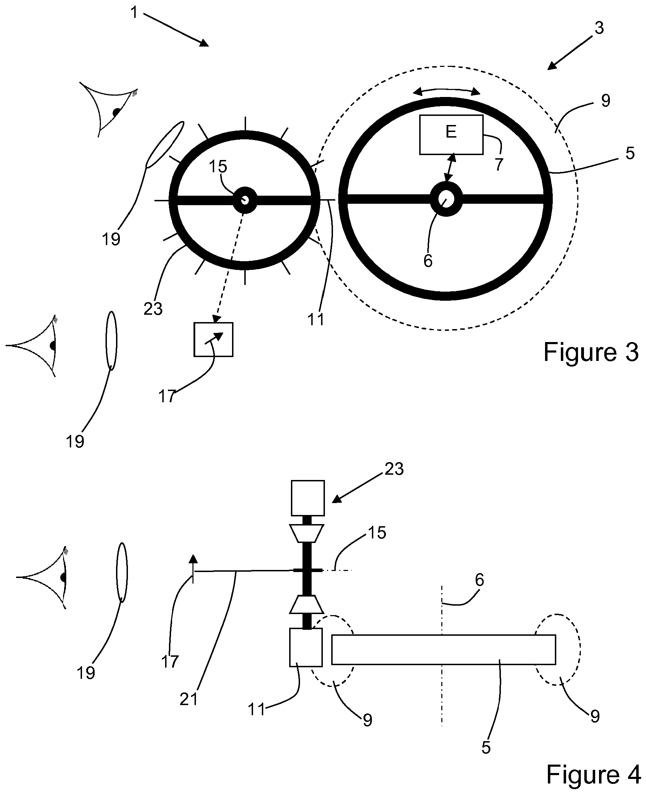

La variante de la figure 3 se base sur celle de la figure 1, dont elle diffère en ce que l'aube 11 est portée par une roue à aubes 23 pivotée sur le bâti du mouvement (non illustré). Cette roue à aubes 23 présente un axe de rotation 15 qui est substantiellement parallèle à l'axe de rotation 6 du balancier 5. Dans cette variante, l'une ou plusieurs aubes 11 pénètrent à la fois dans la zone 9, afin d'être influencée(s) par les perturbations de l'air autour du balancier 5.

La roue à aubes 23 peut constituer elle-même l'organe d'affichage 17, ou peut être solidaire en rotation, ou en liaison cinématique directe ou indirecte, avec ce dernier. Ces deux possibilités sont illustrées par l'intermédiaire des deux yeux et des deux dispositifs optiques 19 sur cette figure.

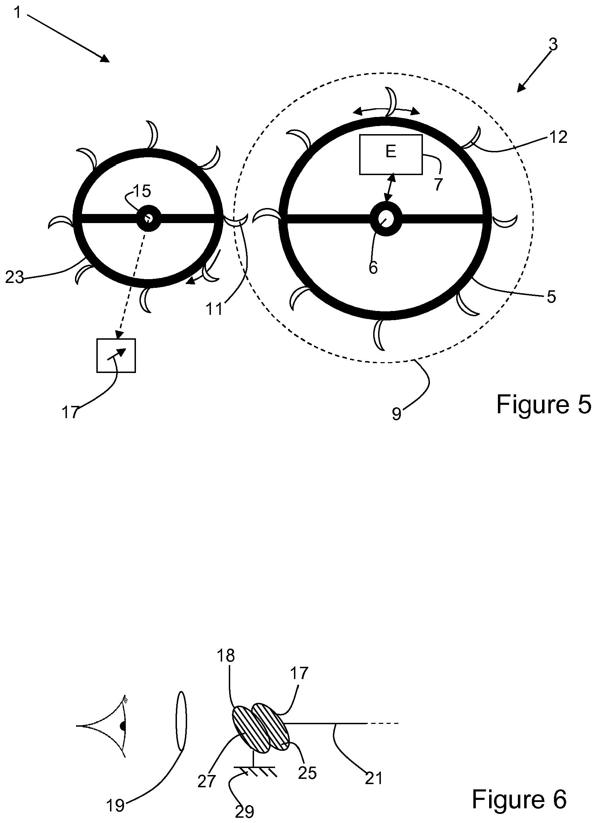

Si les aubes 11 sont droites, la roue à aubes 23 va principalement osciller comme l'aube du mode de réalisation de la figure 3. Par contre, si les aubes 11 sont incurvées selon un seul sens de la même façon qu'un anémomètre, la roue à aubes 23 va être entraînée pour tourner dans un sens prédéterminé. Cette possibilité est illustrée à la figure 5, sur laquelle les côtés concaves des aubes 11 sont orientés de telle sorte que la roue à aubes 23 pivote dans le sens horaire. Le dispositif optique 19 n'a pas été représenté sur cette figure.

Afin de maximiser le flux de fluide autour du balancier 5, ce dernier peut également être muni d'aubes supplémentaires 12, qui s'orientent dans la même direction que les aubes 11 de la roue à aubes 23. Ce faisant, les déplacements du fluide seront favorisés dans le sens antihoraire, ce qui assiste à assurer que la roue à aubes 23 effectue des révolutions au lieu d'oscillations. Le nombre d'aubes 11 et d'aubes supplémentaires 12 peut être choisi selon les besoins.

Les aubes supplémentaires 12 peuvent également être utilisées dans les autres modes de réalisation.

Par contre, les aubes supplémentaires 12 ne sont pas obligatoires, et d'autres moyens sont possibles pour favoriser le développement de perturbations de fluide autour du balancier 5. Par exemple, on pourrait prévoir une serge avec une hauteur plus importante que d'habitude, et/ou des vis périphériques, et/ou d'autres structures saillantes ou en creux (par exemple des trous), et/ou une surface rugueuse, ou tout autre moyen ad hoc sur le pourtour du balancier 5. À nouveau, ceci s'applique également à tout mode de réalisation.

La figure 4 illustre une variante de l'agencement de la figure 3, dans laquelle la roue à aubes 23 est montée perpendiculaire au balancier, de façon analogue au mode de réalisation de la figure 2. À nouveau, la roue à aubes 23 peut porter ou entraîner une tige 21 portant un organe d'indication 17 tel qu'une aiguille, ou peut constituer elle-même ledit organe d'indication, puisque le moyeu et la serge de la roue à aubes 23 est par définition en liaison cinématique avec chacune des aubes 11 qui en sont solidaires.

Les mêmes commentaires concernant la forme et le nombre des aubes 11 et des aubes supplémentaires 12 (et/ou des autres moyens pour favoriser la génération d'un flux de fluide) s'appliquent également pour ce mode de réalisation.

La figure 6 illustre une forme d'organe d'indication particulièrement avantageuse, qui peut s'appliquer à tous les modes de réalisation susmentionnés.

Dans cette variante, la tige 21 (ou la roue à aubes 23 ou n'importe quel autre élément entraîné par le flux de fluide) porte un organe d'indication 17 muni d'un premier motif 25 agencé pour générer un moiré en combinaison avec un deuxième motif 27 prévu sur un élément fixe 18, solidaire du mouvement 1 ou de la pièce d'horlogerie dans laquelle ce dernier est incorporé. Ce deuxième motif 27 peut par exemple se situer sur une plaque en matériau au moins partiellement transparente, fixé sur un élément de bâti 29 du mouvement, ou de la pièce d'horlogerie qui comporte ce dernier. Le premier motif peut, par exemple, être prévu sur la roue à aubes 23, ou sur un élément en liaison cinématique avec la roue à aubes 23 ou le levier 13, le cas échéant.

Ces motifs 25, 27 peuvent être des réseaux de lignes, de points, ou de grilles, ou des combinaisons quelconques, permettant de générer un effet moiré lorsque l'utilisateur visualise le premier motif 25 au travers du deuxième motif 27. Lorsque l'organe d'indication 17 effectue des déplacements relatifs à l'élément fixe 18, l'effet moiré se modifie, ce qui accentue la visibilité desdits déplacements de manière connue.

Bien que l'invention ait été décrite ci-dessus en lien avec des modes de réalisation spécifiques, des variantes supplémentaires sont également envisageables sans sortir de la portée de l'invention comme définie par les revendications. Il faut noter, en particulier, que les aspects des diverses variantes peuvent être combinés de n'importe quelle manière faisant du sens technique.

## Revendications

1. Mouvement (1) pour pièce d'horlogerie comprenant :
- un organe réglant (3) comprenant au moins un oscillateur (5) agencé pour effectuer des oscillations, l'oscillateur (5) étant entouré par un fluide de telle sorte que les oscillations de l'oscillateur (5) perturbent ledit fluide dans une zone (9) adjacente audit oscillateur (5) ;
**caractérisé en ce que** le mouvement (1) comporte en outre :
- au moins une aube (11) se situant au moins partiellement dans ladite zone (9);
- un organe d'indication (17) en liaison cinématique avec ladite aube.

2. Mouvement (1) selon la revendication 1, dans lequel ledit oscillateur (5) est un balancier.

3. Mouvement (1) selon la revendication 2, dans lequel ledit balancier (5) comporte une pluralité de structures (12) s'étendant vers l'extérieur sur au moins une partie de son pourtour.

4. Mouvement (1) selon la revendication 2, dans lequel ledit balancier (5) comporte une pluralité de structures (12) agencées pour favoriser le flux dudit fluide dans un sens prédéterminé.

5. Mouvement (1) selon l'une des revendications précédentes, dans lequel ladite aube (11) se situe sur un levier (13) monté en pivotement sur un élément de bâti dudit mouvement.

6. Mouvement (1) selon la revendication 5, dans lequel ledit levier (13) porte un contrepoids (16) agencé pour équilibrer ladite aube (11) autour d'un axe de rotation (15).

7. Mouvement (1) selon la revendication 6, dans lequel ladite aube (11) fait partie d'une roue à aubes (23) montée en pivotement autour d'un axe de rotation (15).

8. Mouvement (1) selon l'une des revendications 5 à 7, dans lequel ledit axe de rotation est perpendiculaire ou parallèle à l'axe de rotation (6) dudit oscillateur (5).

9. Mouvement (1) selon l'une des revendications 7 et 8, dans lequel ladite roue à aubes (23) présente une pluralité d'aubes (11) incurvées selon un seul sens prédéterminé.

10. Mouvement (1) selon les revendications 4 et 9, dans lequel ladite pluralité de structures (12) comporte une pluralité d'aubes supplémentaires (12) incurvées selon ledit même sens.

11. Mouvement (1) selon l'une des revendications précédentes, dans lequel ledit organe d'indication (17) comporte un premier motif (25) représentant un réseau agencé pour créer un moiré avec un deuxième motif (27) prévu sur un élément (18) au moins partiellement transparent fixe du mouvement (1).

12. Pièce d'horlogerie comprenant un mouvement (1) selon l'une des revendications précédentes.

13. Pièce d'horlogerie selon la revendication précédente, comprenant en outre un dispositif optique (19) agencé pour permettre de visualiser ledit organe d'indication.

## Patentansprüche

1. Uhrwerk (1) für eine Uhr, umfassend:
- ein Regulierorgan (3), das mindestens einen Oszillator (5) umfasst, der für das Ausüben von Oszillationen angeordnet ist, wobei der Oszillator (5) so von einem Fluid umgeben ist, dass die Oszillationen des Oszillators (5) das Fluid in einem an den Oszillator (5) benachbarten Bereich (9) stören;
**dadurch gekennzeichnet, dass** das Uhrwerk (1) ferner Folgendes umfasst:
- mindestens eine Schaufel (11), der sich mindestens teilweise in dem Bereich (9) befindet;
- ein Anzeigeorgan (17) in kinematischer Verbindung mit der Schaufel.

2. Uhrwerk (1) nach Anspruch 1, wobei der Oszillator (5) eine Unruh ist.

3. Uhrwerk (1) nach Anspruch 2, wobei die Unruh (5) eine Vielzahl von Strukturen (12) umfasst, die sich über mindestens einen Teil ihres Umfangs nach außen erstrecken.

4. Uhrwerk (1) nach Anspruch 2, wobei die Unruh (5) eine Vielzahl von Strukturen (12) umfasst, die dazu angeordnet sind, die Strömung des Fluids in einer vorgegebenen Richtung zu begünstigen.

5. Uhrwerk (1) nach einem der vorhergehenden Ansprüche, wobei sich die Schaufel (11) auf einem Hebel (13) befindet, der schwenkbar an einem Rahmenelement des Uhrwerks angebracht ist.

6. Uhrwerk (1) nach Anspruch 5, wobei der Hebel (13) ein Gegengewicht (16) trägt, das angeordnet ist, um die Schaufel (11) um eine Rotationsachse (15) auszugleichen.

7. Uhrwerk (1) nach Anspruch 6, wobei die Schaufel (11) Teil eines Schaufelrads (23) ist, das schwenkbar um eine Rotationsachse (15) angebracht ist.

8. Uhrwerk (1) nach einem der Ansprüche 5 bis 7, wobei die gesagte Rotationsachse zu der Rotationsachse (6) des Oszillators (5) senkrecht oder parallel ist.

9. Uhrwerk (1) nach einem der Ansprüche 7 und 8, wobei das Schaufelrad (23) eine Vielzahl von Schaufeln (11) aufweist, die gemäß einer einzigen vorgegebenen Richtung gekrümmt sind.

10. Uhrwerk (1) nach den Ansprüchen 4 und 9, wobei die Vielzahl von Strukturen (12) eine Vielzahl von zusätzlichen Schaufeln (12) umfasst, die gemäß derselben Richtung gekrümmt sind.

11. Uhrwerk (1) nach einem der vorhergehenden Ansprüche, wobei das Anzeigeorgan (17) ein erstes Muster (25), das ein Gitter darstellt, umfasst, das dazu angeordnet ist, zusammen mit einem zweiten Muster (27), das an einem feststehenden, zumindest teilweise transparenten Element (18) des Uhrwerks (1) vorgesehen ist, einen Moire-Effekt zu erzeugen.

12. Uhr, die ein Uhrwerk (1) nach einem der vorhergehenden Ansprüche umfasst.

13. Uhr nach dem vorhergehenden Anspruch, die ferner eine optische Vorrichtung (19) umfasst, die dazu angeordnet ist, das Visualisieren des Anzeigeorgans zu gestatten.

## Claims

1. Timepiece movement (1) comprising:
- a regulating organ (3) comprising at least one oscillator (5) arranged so as to effect oscillations, the oscillator (5) being surrounded by a fluid in such a manner that the oscillations of the oscillator (5) disrupt said fluid in a zone (9) adjacent to said oscillator (5) ;
**characterized in that** the movement (1) further comprises:
- at least one vane (11) located at least partially in said zone (9);
- an indication organ (17) kinematically linked to said vane.

2. Movement (1) according to Claim 1, wherein said oscillator (5) is a balance wheel.

3. Movement (1) according to Claim 2, wherein said balance wheel (5) comprises a plurality of structures (12) extending outwardly over at least a part of the periphery thereof.

4. Movement (1) according to Claim 2, wherein said balance wheel (5) comprises a plurality of structures (12) arranged so as to promote the flow of said fluid in a predetermined direction.

5. Movement (1) according to one of the preceding claims, wherein said vane (11) is located on a lever (13) mounted pivotably on a frame element of said movement.

6. Movement (1) according to Claim 5, wherein said lever (13) carries a counterweight (16) arranged so as to balance said vane (11) about an axis of rotation (15).

7. Movement (1) according to Claim 6, wherein said vane (11) is part of a vaned wheel (23) mounted pivotably about an axis of rotation (15).

8. Movement (1) according to one of Claims 5 to 7, wherein said axis of rotation is perpendicular or parallel to the axis of rotation (6) of said oscillator (5).

9. Movement (1) according to one of Claims 7 and 8, wherein said vaned wheel (23) has a plurality of vanes (11) curved in a single predetermined direction.

10. Movement (1) according to Claims 4 and 9, wherein said plurality of structures (12) comprises a plurality of supplementary vanes (12) curved in said same direction.

11. Movement (1) according to one of the preceding claims, wherein said indication organ (17) comprises a first pattern (25) representing a grid arranged so as to create a moire effect with a second pattern (27) provided on a fixed at least partially transparent element (18) of the movement (1).

12. Timepiece comprising a movement (1) according to one of the preceding claims.

13. Timepiece according to the preceding claim, further comprising an optical device (19) arranged so as to allow viewing of said indication organ.
